(19) Europäisches Patentamt
European Patent Office
Office européen des brevets

(11) **EP 3 447 321 B1**

(12) **EUROPÄISCHE PATENTSCHRIFT**

(45) Veröffentlichungstag und Bekanntmachung des Hinweises auf die Patenterteilung:
**08.05.2024   Patentblatt 2024/19**

(21) Anmeldenummer: **18159814.5**

(22) Anmeldetag: **02.03.2018**

(51) Internationale Patentklassifikation (IPC):
*F16C 33/78* *(2006.01)*    *F16C 33/58* *(2006.01)*
*B60B 27/00* *(2006.01)*    *B60B 35/18* *(2006.01)*
*F16D 3/223* *(2011.01)*    *F16D 65/12* *(2006.01)*
*F16C 19/18* *(2006.01)*    *B60B 27/06* *(2006.01)*

(52) Gemeinsame Patentklassifikation (CPC):
**F16C 19/522; B60B 27/0073; B60B 27/0094;**
**B60B 35/128; B60B 35/18; F16C 33/581;**
**F16C 33/586; F16C 33/7876; F16C 33/805;**
**F16D 3/223; B60B 27/0005; B60B 27/0036;**
**B60B 27/06; B60B 2900/114; F16C 19/186; (Forts.)**

(54) **MIT EINEM GLEICHLAUFGELENK VERBUNDENE RADNABEN-WÄLZLAGERANORDNUNG FÜR EIN KRAFTFAHRZEUG MIT EINER DICHTUNGSVORRICHTUNG**

WHEEL HUB ROLLING BEARING ASSEMBLY FOR A MOTOR VEHICLE CONNECTED TO A CONSTANT VELOCITY JOINT AND PROVIDED WITH A SEALING DEVICE

ENSEMBLE DE ROULEMENT ET DE MOYEU DE ROUE POUR VÉHICULE MOTORISÉ RELIÉ À UN JOINT HOMOCINÉTIQUE ET MUNI D'UN JOINT D'ÉTANCHÉITÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.03.2017   DE 102017204203**

(43) Veröffentlichungstag der Anmeldung:
**27.02.2019   Patentblatt 2019/09**

(73) Patentinhaber: **AUDI AG**
**85045 Ingolstadt (DE)**

(72) Erfinder:
• **Albl, Johannes**
**85055 Ingolstadt (DE)**
• **Frisch, Michael**
**94513 Schönberg (DE)**

(56) Entgegenhaltungen:
EP-A1- 3 351 403        DE-A1- 2 248 012
DE-A1-102011 003 704    JP-A- 2003 240 003
JP-A- 2005 147 298      JP-A- 2010 106 925
US-A- 2 037 982         US-A- 3 936 105
US-A- 5 813 675

**(Forts. nächste Seite)**

(52) Gemeinsame Patentklassifikation (CPC): (Forts.)
F16C 35/06; F16C 2326/02; F16D 2003/22326

**Beschreibung**

Die Erfindung betrifft eine Radlageranordnung für ein Kraftfahrzeug, mit einer Radnabe und einem Radlager zur drehbaren Lagerung der Radnabe an einem Radträger, wobei das Radlager einen Außenring und einen bezüglich des Außenrings um eine Drehachse drehbaren Innenring aufweist, der mit der Radnabe verbunden ist, wobei von der Radnabe ein Radflansch ausgeht, der eine in axialer Richtung gesehen in die von dem Außenring abgewandte Richtung offene Bremsscheibenaufnahme aufweist, die im Längsschnitt bezüglich der Drehachse gesehen durch einen Rücksprung des Radflanschs gebildet ist und eine Anlagefläche für eine Bremsscheibe aufweist, und wobei in dem Radflansch auf seiner dem Außenring in axialer Richtung zugewandten Seite ein Dichtungsaufnahmeraum ausgebildet ist, der in axialer Richtung eine Dichtungsaufnahmeraumbreite von größer oder gleich 2,0 mm aufweist.

Eine derartige Radlageranordnung geht aus der Druckschrift US 2 037 982 A hervor.

Aus der nicht vorveröffentlichte EP 3 351 403 A1 geht eine Radlageranordnung hervor wobei von der Radnabe ein Radflansch ausgeht, der eine in axialer Richtung gesehen in die von dem Außenring abgewandte Richtung offene Bremsscheibenaufnahme aufweist, die durch einen Rücksprung des Radflanschs gebildet ist und eine Anlagefläche für eine Bremsscheibe aufweist, wobei in dem Radflansch ein Dichtungsaufnahmeraum ausgebildet ist, dadurch gekennzeichnet, wobei der Rücksprung des Radflanschs im Längsschnitt gesehen eine Kröpfungsbreite aufweist, und wobei eine Außenumfangsfläche des Radflanschs durch den Rücksprung einen Bremsscheibensitz bildet.

Die eingangs beschriebene Radlageranordnung dient der drehbaren Lagerung wenigstens eines Rads an einer Karosserie des Kraftfahrzeugs. Die Radlageranordnung ist dabei bevorzugt Bestandteil einer Radaufhängung, welche der Aufhängung, insbesondere der federnden Aufhängung, des Rads bezüglich der Karosserie dient. Das Rad ist an dem Radträger der Radlageranordnung drehbar gelagert. Hierzu ist das Rad an dem Radflansch befestigbar, welcher mit der Radnabe verbunden ist, die schlussendlich mittels des Radlagers an dem Radträger drehbar gelagert ist. Das Radlager verfügt über den Innenring und den Außenring. Es liegt als Wälzlager vor, insbesondere als einreihiges oder mehrreihiges Wälzlager, sodass zwischen dem Innenring und dem Außenring zur Reibungsreduzierung Wälzkörper angeordnet sind, die in nur einer oder mehreren Reihen angeordnet sind.

Der Außenring ist an dem Radträger befestigt beziehungsweise befestigbar, während der Innenring mit der Radnabe und mithin dem Radflansch verbunden ist beziehungsweise mit ihr verbindbar ist. Der Innenring kann einstückig und/oder materialeinheitlich mit der Radnabe und/oder dem Radflansch ausgestaltet sein, insoweit also in diese integriert. Selbstverständlich können auch mehrere Innenringe vorgesehen sein, wobei einer oder mehrere dieser Innenringe separat von der Radnabe oder - alternativ - einstückig oder materialeinheitlich mit der Radnabe ausgeführt sein können. Es kann also wenigstens einer der Innenringe, zum Beispiel genau einer der Innenringe, in die Radnabe integriert sein, wohingegen ein anderer der Innenringe separat von dem Radflansch ausgebildet und nachfolgend an ihm befestigt wird.

Es ist Aufgabe der Erfindung, eine Radlageranordnung für ein Kraftfahrzeug vorzuschlagen, welche gegenüber bekannten Radlageranordnungen Vorteile aufweist, insbesondere in axialer Richtung bezüglich der Drehachse schmal baut, insbesondere im Vergleich mit bekannten Radlageranordnungen. Bevorzugt ist die Radlageranordnung mit einem vorgegebenen Gelenkwellenflansch kombinierbar und entsprechend dimensionierbar. Der Gelenkwellenflansch liegt hierbei zum Beispiel in Form eines Gelenkwellenaußengelenks vor oder weist ein solches auf.

Die Aufgabe wird erfindungsgemäß mit einer Radlageranordnung mit den Merkmalen des Anspruchs 1 erreicht.

Erfindungsgemäß ist vorgesehen, dass der Rücksprung im Längsschnitt gesehen eine Kröpfungsbreite $B_K$ von größer oder gleich 5,0 mm aufweist, durch den Rücksprung eine Außenumfangsfläche des Radflanschs einen Bremsscheibensitz bildet, der bezüglich der Drehachse einen Bremsscheibensitzdurchmesser $D_{BI}$ aufweist, wobei das Verhältnis von Bremsscheibensitzdurchmesser $D_{BI}$ zu einer Außenringbreite $B_{RL}$ des Außenrings größer oder gleich 1,9 ist, und das Verhältnis von Bremsscheibensitzdurchmesser $D_{BI}$ zu einem Teilkreisdurchmesser $D_{TK}$ eines Teilkreises, auf dem

Wälzkörper des Radlagers mit ihrem jeweiligen Drehpunkt angeordnet sind, größer oder gleich 1,2 ist.

Eine bevorzugte Ausgestaltung der Erfindung sieht vor, dass die Außenumfangsfläche des Radflanschs von einer den Dichtungsaufnahmeraum in radialer Richtung nach außen begrenzenden Innenumfangsfläche um einen Flanschquerschnitt $Q_F$ beabstandet ist, wobei der Flanschquerschnitt $Q_F$ größer oder gleich 6,0 mm ist. Zusätzlich oder alternativ kann es vorgesehen sein, dass an dem Radflansch, insbesondere in der Bremsscheibenaufnahme, wenigstens eine Befestigungsmittelaufnahme auf einem Räderlochkreis mit einem Räderlochkreisdurchmesser $D_{LK}$ angeordnet ist, wobei das Verhältnis von Räderlochkreisdurchmesser $D_{LK}$ zu Teilkreisdurchmesser $D_{TK}$ größer oder gleich 1,4 ist.

Von besonderer Bedeutung sind drei unterschiedliche Ausgestaltungen der in Anspruch 1 definierten Radlageranordnung:

So umfasst in einer ersten Ausführungsform und einer zweiten Ausführungsform die Radlageranordnung sowohl die Radnabe und das Radlager als auch eine Gelenkwelle, welche den Gelenkwellenflansch aufweist. In der ersten Ausführungsform ist der Gelenkwellenflansch an der Radnabe befestigt und liegen die Flanschstirnseitenfläche des Gelenkwellenflanschs und die Radnabenstirnseitenfläche, welche bevorzugt durch eine Bördelung der Radnabe ausgebildet ist, aneinander an. Hierbei wird das Radlager gegen den Gelenkwellenflansch und/oder ein Gelenkwellenzapfen verspannt, beispielsweise mittels einer Schraube.

In der zweiten Ausführungsform liegen die Flanschstirnseitenfläche des Gelenkwellenflanschs und die Radnabenstirnseitenfläche nicht aneinander an, sind also zumindest bereichsweise, insbesondere vollständig, voneinander beabstandet angeordnet. Bevorzugt liegt also zwischen den beiden Flächen ein Spalt vor. Eine derartige Ausgestaltung kann vorliegen, sofern das Radlager selbstragend ist, die Bördelung der Radnabe also für die Vorspannung ausreichend ist. Insoweit wird keine zusätzliche Vorspannung über eine Verspannung des Radlagers mit der Gelenkwelle beziehungsweise dem Gelenkwellenflansch realisiert.

In einer dritten Ausführungsform der Radlageranordnung sind hingegen (nur) die Radnabe und das Radlager vorgesehen, wohingegen die Gelenkwelle beziehungsweise der Gelenkwellenflansch nicht vorliegt. Dies ist zum Beispiel für eine nicht angetriebene Radachse mit selbsttragendem Radlager der Fall.

Es sind nun für die unterschiedlichen Ausgestaltungen der in Anspruch 1 definierten Radlageranordnung, also insbesondere die erste Ausführungsform, die zweite Ausführungsform oder die dritte Ausführungsform, zusätzlich zu den bereits definierten Parametern $B_D$, $B_K$, $D_{BI}$, $B_{RL}$, $D_{TK}$, $D_{LK}$ und $Q_F$, soweit zutreffend, weitere Parameter vorgesehen:

Zwischen der Flanschstirnseitenfläche und einem Beugepunkt des Gelenkwellenflanschs liegt in axialer Richtung ein Gelenkwellenflanschabstand $A_{GW}$ vor.

Zwischen dem fahrzeuginnen liegenden Ende der Radnabe, insbesondere der Radnabenstirnseitenfläche, und der Anlagefläche in axialer Richtung liegt eine Lagereinheitsbreite $B_{BS}$ vor. Sich an den Dichtungsaufnahmeraum ein Luftspalt anschließt, der im Längsschnitt gesehen eine Luftspaltbreite $B_{VD}$ aufweist. Der lenflansch außenseitig einen Gelenkwellenflanschdurchmesser $D_{GA}$ aufweist. Der Gelenkwellenflansch einen Kugelkreisdurchmesser $D_{GW}$ aufweist. Der Außenring einen Radlageraußendurchmesser $D_{RA}$ aufweist. Die Radnabe in einer Flanschaufnahme für den Gelenkwellenflansch eine Verzahnung mit einem Verzahnungsdurchmesser $D_{VZ}$ aufweist. Der Dichtungsaufnahmeraum eine Dichtungsaufnahmeraumhöhe $H_D$ aufweist. Es ist nun für die unterschiedlichen Ausgestaltungen der in Anspruch 1 definierten Radlageranordnung, also insbesondere die erste Ausführungsform, die zweite Ausführungsform und/oder die dritte Ausführungsform, zusätzlich zu den bereits definierten Beziehungen, bevorzugt vorgesehen, dass das Verhältnis von Gelenkwellenflanschabstand $A_{GW}$ zu Lagereinheitsbreite $B_{BS}$ größer oder gleich 0,5 ist, und/oder dass das Verhältnis der Summe von Gelenkwellenflanschabstand $A_{GW}$ und Lagereinheitsbreite $B_{BS}$ zu Räderlochkreisdurchmesser $D_{LK}$ kleiner oder gleich 1,0 ist, und/oder dass das Verhältnis der Summe von Gelenkwellenflanschabstand $A_{GW}$ und Lagereinheitsbreite $B_{BS}$ zu Verzahnungsdurchmesser $D_{VZ}$ größer oder gleich 2,5 ist, und/oder dass das Verhältnis der Summe von Gelenkwellenflanschabstand $A_{GW}$ und Lagereinheitsbreite $B_{BS}$ zu Teilkreisdurchmesser $D_{TK}$ größer oder gleich 1,2 ist, und/oder dass das Verhältnis von Gelenkwellenflanschabstand $A_{GW}$ zu Teilkreisdurchmesser $D_{TK}$ kleiner oder gleich 0,6 ist, und/oder dass das Verhältnis von Bremsscheibensitzdurchmesser $D_{BI}$ zu Verzahnungsdurchmesser $D_{VZ}$ größer oder gleich 2,5 ist, und/oder dass das Verhältnis von Gelenkwellenflanschdurchmesser $D_{GA}$ zu Radlageraußendurchmesser $D_{RA}$ größer oder gleich 0,8 ist, und/oder dass das Verhältnis von Gelenkwellenflanschdurchmesser $D_{GA}$ zu Teilkreisdurchmesser $D_{TK}$ größer oder gleich 1,2 ist, und/oder dass das Verhältnis von Kugelkreisdurchmesser $D_{GW}$ zu Teilkreisdurchmesser $D_{TK}$ größer oder gleich 0,7 ist, und/oder dass das Verhältnis von Kugelkreisdurchmesser $D_{GW}$ zu Verzahnungsdurchmesser $D_{VZ}$ größer oder gleich 1,8 ist, und/oder dass das Verhältnis von Räderlochkreisdurchmesser $D_{LK}$ zu Außenringbreite $B_{RL}$ größer oder gleich 2,0 ist, und/oder dass das Verhältnis von Räderlochkreisdurchmesser $D_{LK}$ zu Verzahnungsdurchmesser $D_{VZ}$ größer oder gleich 3,3 ist, und/oder dass die Luftspaltbreite $B_{VD}$ kleiner oder gleich 2,0 mm ist.

Zur besseren Übersichtlichkeit werden die erfindungsgemäßen sowie bevorzugten, in der vorangegangenen Beschreibung definierten Beziehungen nachfolgend verkürzt zusammengefasst:

1.

$$A_{GW}/B_{BS}$$

2.

$$(A_{GW} + B_{BS})/D_{LK}$$

3.

$$(A_{GW} + B_{BS})/D_{VZ}$$

4.

$$(A_{GW} + B_{BS})/D_{TK}$$

5.

$$A_{GW}/D_{TK}$$

6.

$$D_{BI}/B_{RL}$$

7.

$$D_{BI}/D_{TK}$$

8.

$$D_{BI}/D_{VZ}$$

9.

$$D_{GA}/D_{RA}$$

10.

$$D_{GA}/D_{TK}$$

11.

$$D_{GW}/D_{TK}$$

12.

$$D_{GW}/D_{VZ}$$

13.

$$D_{LK}/B_{RL}$$

14.

$$D_{LK}/D_{TK}$$

15.

$$D_{LK}/D_{VZ}$$

16. $B_D$
17. $B_K$
18. $B_{VD}$
19. $Q_F$

Für die Beziehungen gelten folgende vorteilhafte Wertebereiche:

1. größer oder gleich 0,6, insbesondere größer oder gleich 0,7;

2. kleiner oder gleich 0,95, besonders bevorzugt kleiner oder gleich 0,9,

3. größer oder gleich 2,75, besonders bevorzugt größer oder gleich 3;

4. größer oder gleich 1,3, besonders bevorzugt größer oder gleich 1,4;

5. kleiner oder gleich 0,55, besonders bevorzugt kleiner oder gleich 0,5;

6. größer oder gleich 2,0, besonders bevorzugt größer oder gleich 2,1;

7. größer oder gleich 1,3;

8. größer oder gleich 2,7, insbesondere bevorzugt größer oder gleich 2,9;

9. größer oder gleich 0,9, besonders bevorzugt größer oder gleich 1,0;

10. größer oder gleich 1,3, besonders bevorzugt größer oder gleich 1,4;

11. größer oder gleich 0,8, besonders bevorzugt größer oder gleich 0,9;

12. größer oder gleich 1,9, besonders bevorzugt größer oder gleich 2,0;

13. größer oder gleich 2,4, besonders bevorzugt größer oder gleich 2,8;

14. größer oder gleich 1,6, besonders bevorzugt größer oder gleich 1,7;

15. größer oder gleich 3,5, besonders bevorzugt größer oder gleich 3,7;

16. größer oder gleich 3,0 mm, besonders bevorzugt größer oder gleich 4,0 mm;

17. größer oder gleich 6,0 mm, besonders bevorzugt größer oder gleich 7,0 mm;

18. kleiner oder gleich 1,5 mm, besonders bevorzugt kleiner oder gleich 1,0 mm;

19. größer oder gleich 8,0 mm, besonders bevorzugt größer oder gleich 10,0 mm.

Die erfindungsgemäße Radlageranordnung realisiert wenigstens die Beziehungen 6, 7, 16 und 17 mit dem jeweils zu dieser Beziehung gehörigen, in Anspruch 1 definierten Wert. Vorzugsweise sind alle der genannten Beziehungen mit den dazugehörigen Wert realisiert. Die jeweilige Beziehung bildet zusammen mit dem dazugehörigen Wert eine Bedingung. Sofern im Rahmen dieser Beschreibung von einer solchen die Rede ist, ist stets die entsprechende Beziehung mit dem jeweiligen Wert gemeint.

Sofern im Rahmen dieser Beschreibung eine der genannten Bedingungen genannt wird, so ist darunter stets zu verstehen, dass der zu der entsprechenden Bedingung dazugehörige Wert ebenfalls mit einbezogen ist. Wird also rein beispielhaft erwähnt, dass die Bedingung 1 erfüllt sein soll, so wird nicht nur das Verhältnis von Gelenkwellenflanschabstand $A_{GW}$ zu Lagereinheitsbreite $B_{BS}$ bezeichnet, sondern es wird zugleich klargestellt, dass dieses Verhältnis größer oder gleich 0,5, insbesondere größer 0,5, bevorzugt größer oder gleich 0,6, besonders bevorzugt größer oder gleich 0,7 sein soll. Analog verhält es sich für die anderen Bedingungen beziehungsweise Beziehungen. Eingangs wurde bereits erwähnt, dass die Bremsscheibenaufnahme durch den Rücksprung des Radflanschs gebildet ist, sodass schlussendlich eine Kröpfung vorliegt und der Radflansch als gekröpfter Radflansch ausgestaltet ist. Zur Realisierung der Kröpfung ist insbesondere die in Anspruch 2 definierte Beziehung 14 mit dem dazugehörigen Wert von Bedeutung, sodass diese als besonders bedeutsam angesehen wird.

Sofern die erfindungsgemäße Bedingungen und die Bedingung 14 erfüllt ist, ist es vorteilhaft, zusätzlich die Bedingung 15 zu erfüllen. Hieraus kann sich als vorteilhaftes Resultat die Bedingung 13 ergeben, weil die Außenringbreite $B_{RL}$ kleiner sein kann als üblich. Aus der Bedingung 13 ergibt sich zudem eine geringe Gesamtbreite der Radlageranordnung, also eine geringe Lagereinheitsbreite $B_{BS}$ bezogen auf das gegebene Gelenkwellenaußengelenk, was letztendlich das Ziel ist. Entsprechend ist vorteilhaft auch die Bedingung 1 erfüllt. Sind die erfindungsgemäße Bedingungen und die Bedingungen 1, 13, 14 und 15 erfüllt, so können zusätzlich oder alternativ wenigstens eine der Bedingungen 2, 3 und 4, vorzugsweise die Bedingungen 2 und 3, die Bedingungen 2 und 4 oder die Bedingungen 3 und 4, besonders bevorzugt die Bedingungen 2, 3 und 4, erfüllt sein.

Weiterhin kann es sinnvoll sein, die Bedingung 18 zu erfüllen, um einen ausreichenden Freigang des Innenrings zu dem Außenring zu realisieren, sodass ein dynamisches Kippen der beiden gegeneinander ermöglich ist.

Weil es vorteilhafterweise vorgesehen ist, bei einer gegebenen Dimensionierung des Gelenkwellenaußengelenks beziehungsweise des Gelenkwellenflanschs ein axial schmalbauendes Radlager beziehungsweise eine axial schmalbauende Radlageranordnung zu schaffen, ist es zudem vorteilhaft, zusätzlich die Bedingungen 5 und 9 bis 12, jeweils einzeln, in beliebiger Kombination miteinander oder alle, zu realisieren.

Weitere vorteilhafte Ausgestaltungen der erfindungsgemäßen Radlageranordnung ergeben sich aus den Unteransprüchen.

Eine bevorzugte Ausgestaltung der Erfindung sieht vor, dass die Innenumfangsfläche des Dichtungsaufnahmeraums und die Außenumfangsfläche des Radflanschs parallel zueinander verlaufen. Eine weitere, bevorzugte Ausgestaltung der Erfindung sieht vor, dass die Außenumfangsfläche des Radflanschs bezüglich der Drehachse angewinkelt ist. In einer weiteren bevorzugten Ausführungsform der Erfindung kann es vorgesehen sein, dass der Dichtungsaufnahmeraum von der Innenumfangsfläche, einer Seitenfläche und einer Bodenfläche begrenzt und in Richtung des Außenrings und der Wälzkörper randoffen ist.

Eine weitere Ausführungsform der Erfindung sieht vor, dass die Seitenfläche in einer senkrecht auf der Drehachse stehenden Ebene liegt. Eine Weiterbildung sieht zudem vor, dass die Seitenfläche und die Bodenfläche im Längsschnitt gesehen über einen Radius miteinander verbunden sind. Eine weitere bevorzugte Ausführungsform der Erfindung sieht vor, dass die Außenumfangsfläche in den Räderlochkreis eingreift. Eine weitere bevorzugte Ausführungsform sieht vor, dass eine in dem Dichtungsaufnahmeraum angeordnete, insbesondere am Außenring geklemmte, Dichtung im Längsschnitt gesehen eine an der Seitenfläche anliegende erste Dichtlippe, eine an der Bodenfläche anliegende zweite Dichtlippe und (optional) wenigstens eine, bevorzugt an dem Außenring anliegende, Klemmbefestigung aufweist. Zusätzlich kann wenigstens eine weitere Dichtlippe an einer der genannten Flächen oder einer von diesen verschiedenen Fläche anliegen. Es können zudem mehrere weitere Dichtlippen vorliegen, die an derselben Fläche oder unterschiedlichen Flächen anliegen.

Eine weitere Ausgestaltung der Erfindung sieht vor, dass das Radlager als mehrreihiges Wälzlager ausgestaltet ist. Schließlich kann im Rahmen einer weiteren Ausgestaltung der Erfindung vorgesehen sein, dass auf der der Anlagefläche für eine Bremsscheibe in axialer Richtung gegenüberliegenden Seite des Radflanschs wenigstens ein in Umfangsrichtung durchgehender oder wenigstens teilweise durchgehender Axialvorsprung ausgebildet ist.

Die Erfindung wird nachfolgend anhand der in der Zeichnung dargestellten Ausführungsbeispiele näher erläutert, ohne dass eine Beschränkung der Erfindung erfolgt. Dabei zeigt

Figur 1     eine Längsschnittdarstellung durch einen Teil einer Radlageranordnung für ein Kraftfahrzeug,

Figur 2     eine Stirnseitenansicht der Radlageranordnung,

Figur 3     eine erste Detailschnittdarstellung durch die Radlageranordnung, sowie

Figur 4 eine zweite Detailschnittdarstellung durch die Radlageranordnung.

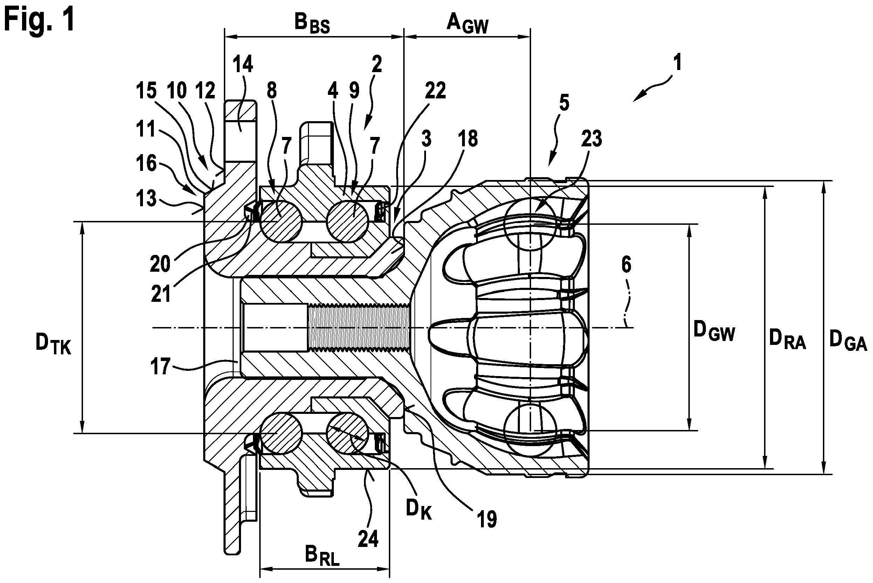

Die Figur 1 zeigt eine Längsschnittdarstellung durch einen Bereich einer Radlageranordnung 1, von welcher insbesondere ein Radlager 2 und eine Radnabe 3 dargestellt sind. Das Radlager 2 verfügt über einen Außenring 4. Weiterhin ist ein Gelenkwellenflansch 5 dargestellt. Der Längsschnitt durch die Radlageranordnung 1 liegt entlang einer Drehachse 6 der Radnabe 3, insbesondere bezüglich des Außenrings 4 vor. Das Radlager 2 ist als Wälzlager ausgestaltet, sodass zwischen einem Innenring des Radlagers 2 und dem Außenring 4 Wälzkörper 7 vorliegen.

In dem hier dargestellten Ausführungsbeispiel ist der Innenring in die Radnabe 3 integriert ausgebildet, sodass die Radnabe 3 selbst eine Lauffläche für einen oder mehrere der Wälzkörper 7 aufweist. Selbstverständlich kann der Innenring jedoch separat von der Radnabe 3 ausgestaltet sein. Zusätzlich zu dem Innenring ist ein nicht näher bezeichneter weiterer Innenring vorgesehen, der ebenfalls eine Lauffläche für wenigstens einen oder mehrere der Wälzkörper 7, insbesondere eine Reihe der Wälzkörper 7, aufweist. Der weitere Innenring ist durch die Ausbildung eines Wälznietbunds an der Radnabe 3 an dieser in axialer Richtung festgesetzt. Der Wälznietbund wird durch Aufweiten der Radnabe 3 in radialer Richtung hergestellt.

Der Innenring und die an ihm angeordnete beziehungsweise befestigte Radnabe 3 sind in dem Außenring 4 angeordnet. Die Radnabe 3 ragt jedoch in axialer Richtung aus diesem heraus. Der in axialer Richtung über den Au-ßenring 4 überstehende Bereich der Radnabe 3 verläuft in radialer Richtung nach außen, sodass er im Längsschnitt gesehen den Außenring 4 in radialer Richtung zumindest teilweise übergreift, in dem hier dargestellten Ausführungsbeispiel vollständig, also zumindest teilweise in axialer Richtung benachbart zu dem Außenring 4 vorliegt. Der genannte Bereich dient als Radflansch und insoweit zur Befestigung der Rads an der Radnabe.

Das Wälzlager liegt als mehrreihiges Wälzlager vor, sodass die Wälzkörper 7 in zwei in axialer Richtung bezüglich der Drehachse 6 voneinander beabstandete Wälzkörperreihen 8 und 9 aufgeteilt sind. Der Außenring 4 des Radlagers 2 ist bevorzugt an einem Radträger eines Kraftfahrzeugs befestigbar. An dem Radflansch und mithin der Radnabe 3 dagegen sind eine Bremsscheibe und ein Rad des Kraftfahrzeugs befestigbar, wobei die Befestigung des Rads an der Radnabe 3 über den Radflansch erfolgt.

Zur Aufnahme der hier nicht dargestellten Bremsscheibe verfügt der Radflansch über eine Bremsscheibenaufnahme 10, die durch einen Rücksprung 11 des Radflanschs gebildet ist. Die Bremsscheibenaufnahme 10 liegt in radialer Richtung gesehen vorzugsweise zumindest bereichsweise in Überdeckung mit dem Außenring 4 vor. Die Bremsscheibenaufnahme 10 wird in axialer Richtung in Richtung des Außenrings 4 beziehungsweise der Wälzkörper 7 von einer Anlagefläche 12 begrenzt, die einem Anlegen beziehungsweise Abstützen der Bremsscheibe in axialer Richtung dient. Die Anlagefläche 12 liegt dabei auf der dem Außenring 4 in axialer Richtung abgewandten Seite des Radflanschs vor. Die Anlagefläche 12 ist gegenüber einer Stirnseitenfläche 13 des Radflanschs in axialer Richtung in Richtung des Außenrings 4 versetzt. Die Anlagefläche 12 und die Stirnseitenfläche 13 können zueinander parallel angeordnet sein oder jeweils vollständig in zueinander parallelen Ebenen liegen.

Die Anlagefläche 12 wird von mehreren Radlöchern 14 durchgriffen, welche der Aufnahme von Radbolzen zur Befestigung des Rads beziehungsweise der Radnabe 3 dienen, Durch den Rücksprung 11 bildet eine Außenumfangsfläche 15 des Radflanschs einen Bremsscheibensitz 16 zur Abstützung der Bremsscheibe in radialer Richtung bezüglich der Drehachse 6. Die Außenumfangsfläche 15 ist vorzugsweise vollständig eben und ist bezüglich der Anlagefläche 12 angewinkelt, schließt mit dieser also einen Winkel ein, welcher größer ist als 0° und kleiner als 180°. Vorzugsweise ist der Winkel hierbei größer als 90° und kleiner als 180°.

Vorstehend wurde bereits erwähnt, dass die Radlageranordnung 1 über den Gelenkwellenflansch 5 verfügt. Dieser ist in einer zentralen Flanschaufnahme 17 der Radnabe 3 angeordnet und bevorzugt formschlüssig und/oder kraftschlüssig mit der Radnabe 3 gekoppelt. In axialer Richtung stützt sich der Gelenkwellenflansch 5 mit einer Flanschstirnseitenfläche 18 an einer Radnabenstirnseitenfläche 19 der Radnabe 3 beziehungsweise des Wälznietbunds ab, liegt also an dieser an, insbesondere vollflächig. Die Flanschstirnseitenfläche 18 und die Radnabenstirnseitenfläche 19 der Radnabe 3 beziehungsweise des Wälznietbunds sind insoweit jeweils wenigstens bereichsweise eben und liegen mit ihren ebenen Bereichen nach einer Montage der Radlageranordnung 1 aneinander an. Es ist erkennbar, dass die Radnabe 3 in axialer Richtung einerseits von der Stirnseitenfläche 13 und andererseits von der Radnabenstirnseitenfläche 19 der Radnabe 3, insbesondere des Wälznietbunds der Radnabe 3, begrenzt ist. Diese definieren insoweit die maximale Erstreckung der Radnabe 3 in axialer Richtung.

Der Radflansch weist auf seiner dem Außenring 4 zugewandten Seite einen Dichtungsaufnahmeraum 20 auf, in welchem eine Dichtung 21 angeordnet ist. Die Dichtung 21 liegt einerseits, insbesondere rotierbar beziehungsweise rotierend, dichtend an dem Radflansch und andererseits, insbesondere drehfest, dichtend an dem Außenring 4 an, sodass das Radlager 2 gegenüber einer Außenumgebung zuverlässig abgedichtet ist. Eine weitere Dichtung 22 ist auf der der Dichtung 21 in axialer Richtung abgewandten Seite des Radlagers 2 angeordnet, nämlich auf der der Dichtung 21 gegenüberliegenden Seite der Wälzkörper 7.

Es ist ersichtlich, dass zwischen der Flanschstirnseitenfläche 18 und einem Beugepunkt des Gelenkwellenflanschs 5 ein Gelenkwellenflanschabstand $A_{GW}$ vorliegt. Weiterhin ist zwischen der Anlagefläche 12 und der Radnabenstirnseitenfläche 19 der Radnabe 3, insbesondere des Wälznietbunds, eine Lagereinheitsbreite $B_{BS}$ vorgesehen. Es wird deutlich, dass der Gelenkwellenflanschabstand $A_{GW}$ und die Lagereinheitsbreite $B_{BS}$ bei montierter Radlageranordnung 1 in axialer Richtung unmittelbar aneinander angrenzen, also eine gemeinsame Grenze aufweisen. Weiterhin wird deutlich, dass der Außenring 4 eine Außenringbreite $B_{RL}$ aufweist.

Der Gelenkwellenflansch 5 weist außenseitig einen Gelenkwellenflanschdurchmesser $D_{GA}$ auf. Zudem verfügt er über einen Kugelkreisdurchmesser $D_{GW}$. Der Außenring 4 weist einen Radlageraußendurchmesser $D_{RA}$ auf. Dieser Außendurchmesser bezeichnet den Durchmesser einer Sitzfläche 24, welche in einem Sitz des hier nicht dargestellten Radträgers angeordnet werden kann und entsprechend das Radlager 2 beziehungsweise den Au-ßenring 4 in radialer Richtung bezüglich des Radträgers abstützt. Die Wälzkörper 7 des Radlagers 2 sind mit ihrem jeweiligen Drehpunkt auf einem Teilkreis mit einem Teilkreisdurchmesser $D_{TK}$ angeordnet. Die Wälzkörper 7 selbst weisen einen Wälzkörperdurchmesser $D_K$ auf.

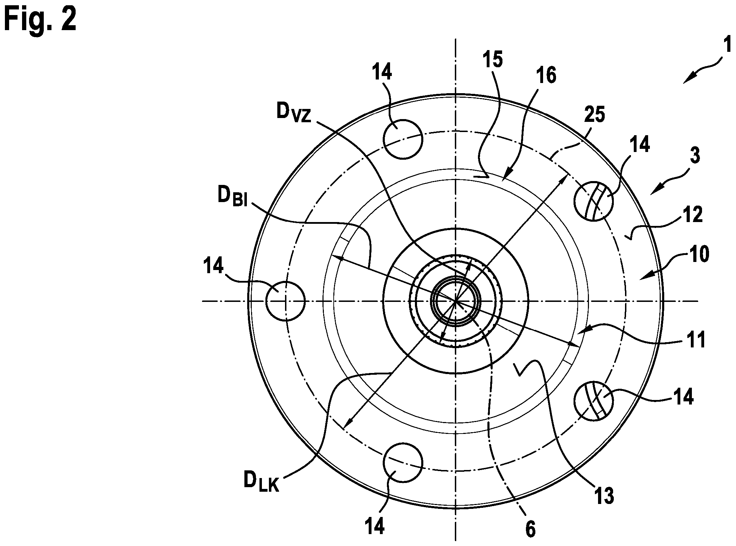

Die Figur 2 zeigt eine Draufsicht auf die Radlageranordnung 1 in axialer Richtung, nämlich in Richtung des Radlagers 2, von welchem hier lediglich ein Teil der Radnabe 3 und der Radflansch erkennbar ist. Es wird deutlich, dass mehrere Radlöcher 14 vorgesehen sind, welche vorzugsweise gleichmäßig in Umfangsrichtung verteilt angeordnet sind. Die Radlöcher 14 sind entlang eines Räderlochkreises 25 angeordnet, welcher einen Räderlochkreisdurchmesser $D_{LK}$ aufweist. Der Bremsscheibensitz 16 weist bezüglich der Drehachse 6 einen Bremsscheibensitzdurchmesser $D_{BI}$ auf, wobei dieser Durchmesser vorzugsweise an derjenigen Stelle bestimmt wird, an welcher die Außenumfangsfläche 15 des Bremsscheibensitzes 16 in die Anlagefläche 12 übergeht. In der Flanschaufnahme 17 weist die Radnabe 3 eine hier nicht im Detail dargestellte Verzahnung auf. Diese weist einen Verzahnungsdurchmesser $D_{VZ}$ auf, welcher hier angedeutet ist.

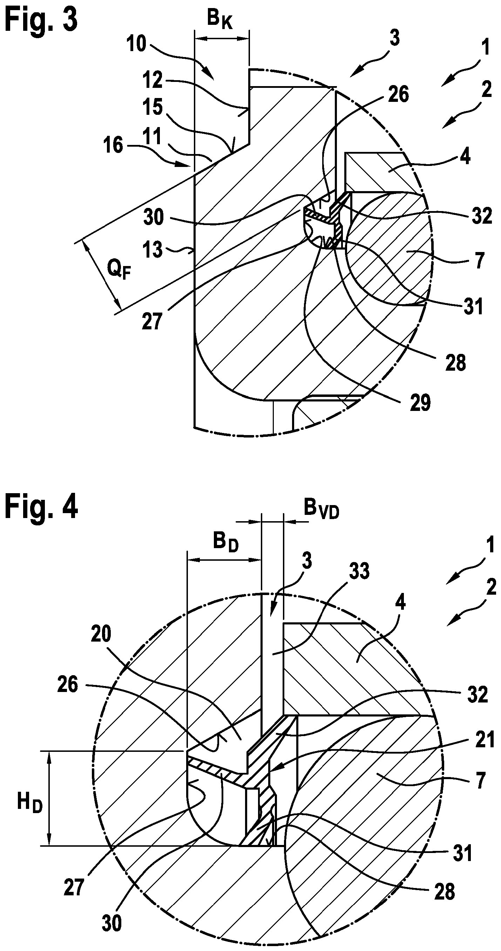

Die Figur 3 zeigt eine Detailschnittdarstellung eines Bereichs der Radlageranordnung 1, nämlich zum einen durch das Radlager 2, von welchem der Innenring, der Außenring 4 und einer der Wälzkörper 7 erkennbar sind. Zum anderen sind die Radnabe 3 und der Radflansch dargestellt. Deutlich zu erkennen ist der Dichtungsaufnahmeraum 20 mit der Dichtung 21. Der Dichtungsaufnahmeraum 20 wird von einer Innenumfangsfläche 26, einer Seitenfläche 27 sowie einer Bodenfläche 28 begrenzt. Er ist in Richtung des Außenrings 4 randoffen ausgestaltet, liegt also im Wesentlichen als Kanal beziehungsweise Rinne in dem Radflansch vor.

Vorzugsweise ist die Seitenfläche 27 zumindest teilweise, insbesondere vollständig, in einer senkrecht auf der Drehachse 6 stehenden Ebene angeordnet. Es kann vorgesehen sein, dass die Seitenfläche 27 und die Bodenfläche 28 über einen Radius 29 beziehungsweise eine Krümmung miteinander verbunden sind. Die Dichtung 21 verfügt über eine erste Dichtlippe 30, eine zweite Dichtlippe 31 sowie eine Klemmbefestigung 32. Die erste Dichtlippe 30 liegt an der Seitenfläche 27, die zweite Dichtlippe 31 an der Bodenfläche 28 und die Klemmbefestigung 32 an dem Außenring 4 an, jeweils dichtend. Es ist erkennbar, dass der Rücksprung 11 eine Kröpfungsbereite $B_K$ aufweist, welche den Abstand zwischen der Anlagefläche 12 und der Stirnseitenfläche 13 in axialer Richtung beschreibt. Weiterhin wird deutlich, dass die Außenumfangsfläche 15, die den Bremsscheibensitz 16 bilden kann, um einen Flanschquerschnitt $Q_F$ von der Innenumfangsfläche 26 beabstandet ist. Besonders bevorzugt verlaufen hierbei die Innenumfangsfläche 26 und die Außenumfangsfläche 15 parallel zueinander, insbesondere durchgehend. Die Außenumfangsfläche 15 ist hierbei bezüglich der Drehachse 6 angewinkelt, schließt also in dem hier dargestellten Längsschnitt mit der Drehachse einen Winkel ein, welcher größer als 0° und kleiner als 180° ist.

Die Figur 4 zeigt eine weitere Detailschnittdarstellung der Radlageranordnung 1. Es ist erkennbar, dass der Dichtungsaufnahmeraum 20 eine Dichtungsaufnahmeraumhöhe $H_D$ aufweist. Diese beschreibt vorzugsweise den Abstand zwischen der Bodenfläche 28 und der Innenumfangsfläche 26, nämlich den im Längsschnitt vorliegenden kleinsten Abstand. Weiterhin ist eine Dichtungsaufnahmeraumbreite $B_D$ zu erkennen, welche die Breite des Dichtungsaufnahmeraums 20 in axialer Richtung beschreibt. Bevorzugt entspricht die Dichtungsaufnahmeraumbreite $B_D$ der Erstreckung der Innenumfangsfläche 26 in axialer Richtung, insbesondere im Längsschnitt gesehen. An den Dichtungsaufnahmeraum 20 schließt sich ein Luftspalt 33 mit einer Luftspaltbreite $B_{VD}$ an. Der Luftspalt 33 liegt in axialer Richtung bereichsweise zwischen dem Radflansch und dem Außenring 4 vor, nämlich ausgehend von dem Dichtungsaufnahmeraum 20 in radialer Richtung nach außen, vorzugsweise durchgehend.

Für die genannten Abmessungen und Größen gelten besonders bevorzugt die eingangs bereits erwähnten Werte. Werden die ebenfalls eingangs beschriebenen Bedingungen erfüllt, liegen diese also innerhalb des jeweils beschriebenen Wertebereichs, so kann die Dichtung 21 ohne weiteres in den Radflansch integriert werden, nämlich auf die dargestellte Art und Weise. Somit lässt sich eine äußerst kompakte Radlageranordnung 1 realisieren.

**Patentansprüche**

1. Radlageranordnung (1) für ein Kraftfahrzeug mit einer Radnabe (3) und einem als Wälzlager ausgestalteten Radlager (2) zur drehbaren Lagerung der Radnabe (3) an einem Radträger, wobei das Radlager (2) Wälzkörper (7), einen Außenring (4) und einen bezüglich des Außenrings (4) um eine Drehachse (6) drehbaren Innenring aufweist, der mit der Radnabe (3) verbunden ist, wobei von der Radnabe (3) ein Radflansch ausgeht, der eine in axialer Richtung gesehen in die von dem Außenring (4) abgewandte Richtung offene Bremsscheibenaufnahme (10) aufweist, die im Längsschnitt bezüglich der Drehachse (6) gesehen durch einen Rücksprung (11) des Radflanschs gebildet ist und eine Anlagefläche (12) für eine Bremsscheibe aufweist, und wobei

- in dem Radflansch auf seiner dem Außenring (4) in axialer Richtung zugewandten Seite ein Dichtungsaufnahmeraum (20) ausgebildet ist, der in axialer Richtung eine Dichtungsaufnahmeraumbreite ($B_D$) von größer oder gleich 2,0 mm aufweist,

**dadurch gekennzeichnet, dass**

- der Rücksprung (11) des Radflanschs im Längsschnitt gesehen eine Kröpfungsbreite ($B_K$) von größer oder gleich 5,0 mm aufweist,
- durch den Rücksprung (11) des Radflanschs eine Außenumfangsfläche (15) des Radflanschs einen Bremsscheibensitz (16) bildet, der bezüglich der Drehachse (6) einen Bremsscheibensitzdurchmesser ($D_{BI}$) aufweist, wobei das Verhältnis von Bremsscheibensitzdurchmesser ($D_{BI}$) zu einer Au-ßenringbreite ($B_{RL}$) des Außenrings (4) größer oder gleich 1,9 ist, und
- das Verhältnis von Bremsscheibensitzdurchmesser ($D_{BI}$) zu einem Teilkreisdurchmesser ($D_{TK}$) eines Teilkreises, auf dem Wälzkörper (7) des Radlagers (2) mit ihrem jeweiligen Drehpunkt angeordnet sind, größer oder gleich 1,2 ist.

2. Radlageranordnung nach Anspruch 1, **dadurch gekennzeichnet, dass**

- an dem Radflansch, insbesondere in der Bremsscheibenaufnahme (10), wenigstens eine Befestigungsmittelaufnahme (14) auf einem Räderlochkreis (25) mit einem Räderlochkreisdurchmesser ($D_{LK}$) angeordnet ist, wobei
- das Verhältnis von Räderlochkreisdurchmesser ($D_{LK}$) zu Teilkreisdurchmesser ($D_{TK}$) größer oder gleich 1,4 ist.

3. Radlageranordnung nach einem der vorhergehenden Ansprüche,
**dadurch gekennzeichnet, dass**

- die Außenumfangsfläche (15) des Radflanschs von einer den Dichtungsaufnahmeraum (20) in radialer Richtung nach außen begrenzenden Innenumfangsfläche (26) um einen Flanschquerschnitt ($Q_F$) beabstandet ist, wobei
- der Flanschquerschnitt ($Q_F$) größer oder gleich 6,0 mm ist.

4. Radlageranordnung nach Anspruch 3, **dadurch gekennzeichnet, dass** die Innenumfangsfläche (26) des Dichtungsaufnahmeraums (20) und die Außenumfangsfläche (15) des Radflanschs parallel zueinander verlaufen.

5. Radlageranordnung nach einem der vorhergehenden Ansprüche,
**dadurch gekennzeichnet, dass** die Außenumfangsfläche (15) des Radflanschs bezüglich der Drehachse (6) angewinkelt ist.

6. Radlageranordnung nach Anspruch 3 oder 4, **dadurch gekennzeichnet, dass** der Dichtungsaufnahmeraum (20) von der Innenumfangsfläche (26), einer Seitenfläche (27) und einer Bodenfläche (28) begrenzt und in Richtung des Außenrings (4) und der Wälzkörper (7) randoffen ist.

7. Radlageranordnung nach Anspruch 6, **dadurch gekennzeichnet, dass** die Seitenfläche (27) in einer senkrecht auf der Drehachse (6) stehenden Ebene liegt.

8. Radlageranordnung nach Anspruch 6 oder 7, **dadurch gekennzeichnet, dass** die Seitenfläche (27) und die Bodenfläche (28) im Längsschnitt gesehen über einen Radius miteinander verbunden sind.

9. Radlageranordnung nach Anspruch 2, **dadurch gekennzeichnet, dass** die Außenumfangsfläche (15) in den Räderlochkreis (25) eingreift.

10. Radlageranordnung nach einem der Ansprüche 6 bis 8, **dadurch gekennzeichnet, dass** eine in dem Dichtungsaufnahmeraum (20) angeordnete Dichtung (21) im Längsschnitt gesehen eine an der Seitenfläche (27) anliegende erste Dichtlippe (30), eine an der Bodenfläche (28) anliegende zweite Dichtlippe (31) und eine an dem Außenring (4) anliegende Klemmbefestigung (32) aufweist.

11. Radlageranordnung nach einem der vorhergehenden Ansprüche, **dadurch gekennzeichnet, dass** das Radlager (2) als mehrreihiges Wälzlager ausgestaltet ist.

## Claims

1. Wheel bearing arrangement (1) for a motor vehicle having a wheel hub (3) and a wheel bearing (2) designed as a roller bearing for the rotatable mounting of the wheel hub (3) on a wheel carrier, wherein the wheel bearing (2) has roller bodies (7), an outer ring (4) and an inner ring, rotatable with regard to the outer ring (4) about a rotational axis (6), which is connected to the wheel hub (3), wherein from the wheel hub (3) projects a wheel flange which has a brake disc receptacle (10), open in a direction facing away from the outer ring (4) when viewed in axial direction, which in longitudinal section, viewed with respect to the rotational axis (6), is formed by a recess (11) in the wheel flange and has a bearing surface (12) for a brake disc, and wherein

   - in the wheel flange on its side facing towards the outer ring (4) in axial direction is formed a seal receiving space (20) which in axial direction has a seal receiving width (BD) of greater than or equal to 2.0 mm,

   **characterised in that**

   - the recess (11) of the wheel flange viewed in longitudinal section has an offset width ($B_K$) of less than or equal to 5.0 mm,
   - by means of the recess (11) of the wheel flange an outer circumferential surface (15) of the wheel flange forms a brake disc seat (16) which with regard to the rotational axis (6) has a brake disc seat diameter ($D_{BI}$), wherein the ratio of brake disc seat diameter ($D_{BI}$) TO an outer ring width ($B_{RL}$) of the outer ring (4) is greater than or equal to 1.9, and

      - the ratio of brake disc seat diameter ($D_{BI}$) TO a partial circle diameter ($D_{TK}$) of a partial circle, on which roller bodies (7) of the wheel bearing (2) are arranged with their respective fulcrums, is greater than or equal to 1.2.

2. Wheel bearing arrangement as claimed in claim 1, **characterized in that**

   - against the wheel flange, in particular in the brake disc receptacle (10), is arranged at least one fastening means receptacle (14) on a wheel bolt circle (25) having a wheel bolt circle diameter ($D_{LK}$), wherein
   - the ratio of wheel bolt circle diameter ($D_{LK}$) TO partial circle diameter ($D_{TK}$) is greater than or equal to 1.4.

3. Wheel bearing arrangement according to any one of previous claims, **characterized in that**

   - the outer circumferential surface (15) of the wheel flange is spaced from an inner circumferential surface (26) delimiting the seal receiving space (20) in radial direction to the outside by a flange cross-section ($Q_F$), wherein
   - the flange cross-section ($Q_F$) is greater than or equal to 6.0 mm.

4. Wheel bearing arrangement according to claim 3, **characterized in that** the inner circumferential surface (26) of the seal receiving space (20) and the outer circumferential surface (15) of the wheel flange extend parallel to one another.

5. Wheel bearing arrangement according to any of the preceding claims, **characterized in that** the outer circumferential surface (15) of the wheel flange is angled with respect to the rotational axis (6).

6. Wheel bearing arrangement according to claim 3 or 4, **characterized in that** the seal receiving space (20) is delimited by the inner circumferential surface (26), a side surface (27) and a floor surface (28) and is open at the edge in the direction of the outer ring (4) and the roller body (7).

7. Wheel bearing arrangement according to claim 6, **characterized in that** the side surface (27) lies in a plane standing perpendicularly on the rotational axis.

8. Wheel bearing arrangement according to 6 or 7, **characterized in that** the side surface (27) and the floor surface (28) are connected to one another, viewed in longitudinal section, by way of a radius.

9. Wheel bearing arrangement according to claim 2, **characterized in that** the outer circumferential surface (15) engages in the wheel bolt circle (25).

10. Wheel bearing arrangement according to any of claims 6 to 8, **characterized in that** a seal (21) arranged in the seal receiving space (20), viewed in longitudinal section, has a first sealing lip (30) resting on the side surface (27), a second lip (31) resting on the floor surface (28), and a clamping assembly (32) resting against the outer ring (4).

11. Wheel bearing arrangement according to any one of previous claims, **characterized in that** the wheel bearing (2) is designed as a multi-row roller bearing.

## Revendications

1. Ensemble de palier de roue (1) pour un véhicule automobile avec un moyeu de roue (3) et un palier de roue (2) configuré comme palier à roulement pour le logement rotatif du moyeu de roue (3) au niveau d'un support de roue, dans lequel le palier de roue (2) présente des corps de roulement (7), un anneau extérieur (4) et un anneau intérieur rotatif par rapport par rapport à l'anneau extérieur (4) autour d'un axe de rotation (6), anneau intérieur qui est relié au moyeu de roue (3), dans lequel une bride de roue sort du moyeu de roue (3), bride qui présente un logement de disque de frein (10) ouvert, vu dans le sens axial, en s'éloignant de l'anneau extérieur (4), logement qui est formé, vu en coupe longitudinale, par rapport à l'axe de rotation (6) par un décrochement (11) de la bride de roue et présente une surface d'appui (12) pour un disque de frein, et dans lequel

- un espace de réception de joint d'étanchéité (20) est réalisé dans la bride de roue sur son côté tourné vers l'anneau extérieur (4) dans le sens axial, espace qui présente dans le sens axial une largeur d'espace de réception de joint d'étanchéité (BO) supérieure ou égale à 2,0 mm,

**caractérisé en ce que**

- le décrochement (11) de la bride de roue présente vu en coupe longitudinale une largeur de coude (B$_K$) supérieure ou égale à 5,0 mm,
- une surface périphérique extérieure (15) de la bride de roue forme un siège de disque de frein (16) par le décrochement (11) de la bride de roue, siège qui présente un diamètre de siège de disque de frein (D$_{BI}$) par rapport à l'axe de rotation (6), dans lequel le rapport entre le diamètre de siège de disque de frein (D$_{BI}$) ET une largeur d'anneau extérieur (B$_{RL}$) de l'anneau extérieur (4) est supérieur ou égal à 1,9, et

- le rapport entre le diamètre de siège de disque de frein (D$_{BI}$) ET un diamètre de cercle partiel (D$_{TK}$) d'un cercle partiel, sur lequel sont agencés des corps de roulement (7) du palier de roue (2) avec leur point de rotation respectif, est supérieur ou égal à 1,2.

2. Ensemble de palier de roue selon la revendication 1, **caractérisé en ce que**

- au niveau de la bride de roue, en particulier dans le logement de disque de frein (10), au moins un logement de moyen de fixation (14) est agencé sur un trou d'axe de roue (25) avec un diamètre de trou d'axe de roue (D$_{LK}$, dans lequel
- le rapport entre le diamètre de trou d'axe de roue (D$_{LK}$) ET le diamètre de cercle partiel (D$_{TK}$) est supérieur ou égal à 1,4.

3. Ensemble de palier de roue selon l'une quelconque des revendications précédentes, **caractérisé en ce que**

- la surface périphérique extérieure (15) de la bride de roue est espacée d'une surface périphérique intérieure (26) délimitant, dans le sens radial vers l'extérieur, l'espace de réception de joint d'étanchéité (20) d'une section transversale de bride (Q$_F$), dans lequel
- la section transversale de bride (Q$_F$) est supérieure ou égale à 6,0 mm.

4. Ensemble de palier de roue selon la revendication 3, **caractérisé en ce que** la surface périphérique intérieure (26) de l'espace de réception de joint d'étanchéité (20) et la surface périphérique extérieure (15) de la bride de roue s'étendent parallèlement l'une à l'autre.

5. Ensemble de palier de roue selon l'une quelconque des revendications précédentes, **caractérisé en ce que** la surface périphérique extérieure (15) de la bride de roue est coudée par rapport à l'axe de rotation (6).

6. Ensemble de palier selon la revendication 3 ou 4, **caractérisé en ce que** l'espace de réception de joint d'étanchéité (20) est délimité par la surface périphérique intérieure (26), une surface latérale (27) et une surface de fond (28) et est ouvert sur le bord en direction de l'anneau extérieur (4) et des corps de roulement (7).

7. Ensemble de palier de roue selon la revendication 6, **caractérisé en ce que** la surface latérale (27) se trouve dans un plan se trouvant perpendiculairement à l'axe de rotation (6).

8. Ensemble de palier de roue selon la revendication 6 ou 7, **caractérisé en ce que** la surface latérale (27) et la surface de fond (28) sont reliées entre elles vu en coupe longitudinale par le biais d'un rayon.

9. Ensemble de palier de roue selon la revendication 2, **caractérisé en ce que** la surface périphérique extérieure (15) s'engage dans le trou d'axe de roue (25).

10. Ensemble de palier de roue selon l'une quelconque des revendications 6 à 8, **caractérisé en ce qu'**un joint d'étanchéité (21) agencé dans l'espace de réception de joint d'étanchéité (20) présente, vu en coupe longitudinale, une première lèvre d'étanchéité (30) reposant contre la surface latérale (27), une seconde lèvre d'étanchéité (31) reposant contre la surface de fond (28) et une fixation de serrage (32) reposant contre l'anneau extérieur (4).

11. Ensemble de palier de roue selon l'une quelconque des revendications précédentes, **caractérisé en ce que** le palier de roue (2) est configuré comme palier à roulement à plusieurs rangées.

**Fig. 1**

**Fig. 2**

EP 3 447 321 B1

## Fig. 3

$B_K$

10
12
15
16 11
30
13
$Q_F$
27

3
26
4
32
7
31
28
29
1
2

## Fig. 4

$B_{VD}$
$B_D$
$B_{VD}$

20
26
$H_D$
27
30

3
33
4
32
21
7
31
28
1
2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2037982 A

- EP 3351403 A1